(19) Europäisches Patentamt / European Patent Office / Office européen des brevets

(11) **EP 4 671 605 A1**

(12) **EUROPEAN PATENT APPLICATION**
published in accordance with Art. 153(4) EPC

(43) Date of publication:
**31.12.2025 Bulletin 2026/01**

(21) Application number: **24759941.8**

(22) Date of filing: **05.01.2024**

(51) International Patent Classification (IPC):
**F21S 43/20** (2018.01)   **F21V 5/00** (2018.01)
**F21V 5/04** (2006.01)   **F21W 103/20** (2018.01)

(52) Cooperative Patent Classification (CPC):
**F21S 43/20; F21V 5/00; F21V 5/04;** F21W 2103/20

(86) International application number:
**PCT/JP2024/000063**

(87) International publication number:
**WO 2024/176633 (29.08.2024 Gazette 2024/35)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **20.02.2023 JP 2023024081**

(71) Applicant: **Mitsuba Corporation**
**Kiryu-shi**
**Gunma 376-8555 (JP)**

(72) Inventor: **YAMAOKA Yasushi**
**Kiryu-shi, Gunma 376-8555 (JP)**

(74) Representative: **Becker Kurig & Partner**
**Patentanwälte mbB**
**Bavariastraße 7**
**80336 München (DE)**

(54) **VEHICLE LAMP**

(57)   Provided is a vehicle lamp making it possible to improve visibility from the exterior and design properties, and effectively distribute light emitted from a light source, thus efficiently obtaining light which is emitted outward in the vehicle width direction, as is legally required. A vehicle lamp (1) is provided with a lens (4), and a luminous body (6) for emitting light (B) to an outer surface (10a) side of a lens body (10) via the lens (4). An inner surface (10b) of the lens body (10) has a lens cut region (AR), and in the lens cut region, formed is at least one lens cut part (16) for distributing light so that the light (B) that is from the luminous body (6) and incident in the lens (4) is emitted outwardly along the optical axis (OP) direction. An additional reflective surface (18) is formed in part of the lens cut region. Of the light (B) that is from the luminous body (6) and incident in the lens (4), the additional reflective surface (18) internally reflects the light (B) that is internally reflected at the outer surface (10a), and the additional reflective surface orients the light (B) so that the same is emitted outwardly along a direction intersecting the optical axis (OP) direction.

FIG. 4

EP 4 671 605 A1

**Description**

Technical Field

The invention relates to a vehicle lamp.

Related Art

A vehicle lamp installed in motorcycles and other vehicles includes a housing, a substrate on which a light source is mounted and which is provided inside the housing, and a lens covering the front surface of the housing. Light emitted from the light source is emitted outward through the lens. The lens is formed to orient the light emitted from the light source in a predetermined direction. Accordingly, the visibility and the design aesthetics of the light emitted through the lens from the outside is improved.

Citation List

Patent Literature

[Patent Document 1] Japanese Patent Application Laid-Open Publication No. 2012-243734
[Patent Document 2] Japanese Patent No. 6381113

SUMMARY OF INVENTION

Technical Problem

However, depending on the angle at which light is emitted into the lens, the light may be internally reflected in the lens, and may become light that does not contribute to the visibility or design aesthetics of the vehicle lamp from the outside.
In addition, there may be an issue that it is difficult to efficiently obtain the light emitted outward in the vehicle width direction as required by regulations.
Therefore, the invention provides a vehicle lamp that can improve the visibility and design aesthetics from the outside while effectively distributing light emitted from the light source to efficiently obtain light emitted outward in the vehicle width direction as required by regulations. Solution to Problem
In order to solve the issue, a first aspect of the invention provides a vehicle lamp, provided in a vehicle. A vehicle lamp includes: a lens; and a light source, disposed on an inner surface side of the lens and emitting light toward an outer surface side of the lens through the lens. An inner surface of the lens has a lens cut region. In the lens cut region, at least one lens cut part is formed, and the at least one lens cut part distributes light so that the light emitted from the light source into the lens is emitted outward along an optical axis direction. An additional reflective surface formed at a portion of the lens cut region is provided. Among the light emitted from the light source into the lens, the additional reflective surface internally reflects light internally reflected on an outer surface of the lens and performs orientation so that the light is emitted outward along a direction intersecting with the optical axis direction.
With such configuration, the majority of light from the light source can be emitted along the optical axis direction through the outer surface of the lens. The visibility and design aesthetics of the vehicle lamp when viewed from the exterior can be improved.
In addition, it is possible to emit the light internally reflected by the lens along a direction intersecting with the optical axis direction by utilizing the additional reflective surface. Therefore, with a simple structure, it is possible to for the vehicle lamp to efficiently obtain the emitted light directed outward in the vehicle width direction as required by regulations.
According to the second aspect of the invention, the vehicle lamp of the first aspect includes multiple light sources and multiple lens cut regions corresponding to the respective light sources. The additional reflective surface is disposed on an outer side in a vehicle with direction with respect to the light source in the lens cut region arranged on an outermost side in the vehicle width direction.
With such configuration, the vehicle lamp can more efficiently and reliably obtain the light emitted outward in the vehicle width direction, as required by regulations.
According to the third aspect of the invention, in the vehicle lamp of the first or second aspect, the lens cut region has: a direct illumination cut region, in which the light emitted from the light source into the lens is directly guided toward the outer surface of the lens; and a reflection cut region, in which the light emitted from the light source into the lens is internally reflected in the lens cut part and then guided toward the outer surface of the lens. At least the lens cut part is formed in the reflection cut region. One of the lens cut part formed in the reflection cut region comprises a boundary cut part having a boundary surface along the optical axis direction at a boundary between the direct illumination cut region and the reflection cut region. The boundary region part has: a direct illumination range, in which light emitted from the light source into the lens through the boundary surface is directly guided toward the outer surface of the lens; and a reflection range, in which the light emitted from the light source into the lens through the boundary surface is internally reflected in the boundary cut part and then guided to the outer surface of the lens. When the direct illumination range on the boundary surface is set as $\gamma$, a point that is farthest from the light source in the direct illumination range $\gamma$ is set as a point a1, a point that is closest to the light source in the direct illumination range v is set as a point b1, a point where light emitted into the lens through the point a1 is internally reflected on the outer surface of the lens is set as a point a2, a point where light emitted into the lens through the point b1 is internally reflected on the outer surface of the lens is set as a point b2, a point where light internally reflected at the point a2 is again internally reflected on the inner surface of the lens is set as a point a3, a point where light internally reflected at the point b2 is again internally reflected on the inner surface of the lens is set as a point b3, a distance along the optical axis direction between an light source side end in the optical axis direction at the point a1 and a light emission side end in the optical axis direction at the point a2, or a distance along the optical axis direction between a light source side end in the optical axis direction at the point b1 and a light emission side end in the optical axis direction at the point b2 is set as a distance t1, a thickness of the lens parallel to the optical axis direction between the points a2 and a3, or a thickness of the lens parallel to the optical axis direction between the points b2 and b3 is set as t2, an angle between a direction of light in the lens after the light is emitted through the point a1 and the optical axis direction is set as $\alpha2$, an angle between a direction of light in the lens after the light is emitted through the point a2 and the optical axis direction is set as $\alpha3$, an angle between a direction of light in the lens after the light is emitted through the point b1 and the optical axis direction is set as $\beta2$, an angle between a direction of light in the lens after the light is emitted through the point b2 and the optical axis direction is set as $\beta3$, a distance between the light source and the point a1 in a direction orthogonal to the optical axis direction is set as La1, a distance between the light source and the point a3 in a direction orthogonal to the optical axis direction is set as La3, a distance between the light source and the point b1 in a direction orthogonal to the optical axis direction is set as Lb1, a distance between the light source and the point b3 in a direction orthogonal to the optical axis direction is set as Lb3, and a distance of the additional reflective surface from the light source in a direction orthogonal to the optical axis direction is set as Lr, the distances L13, Lb3, and Lr satisfy:

$$La3=La1+t1\times\tan\alpha2+t2\times\tan\alpha3,$$

$$Lb3=Lb1+t1\times\tan\beta2+t2\times\tan\beta3,$$

and

$$La3\leq Lr\leq Lb3.$$

With such configuration, it is possible to dispose the additional reflective surface at an appropriate location. As a result, the vehicle lamp can more efficiently and reliably obtain the light emitted outward in the vehicle width direction, as required by regulations.

According to the fourth aspect of the invention, in the vehicle lamp of the third aspect, the lens is formed so that light emitted into the lens through the direct illumination range $\gamma$ is reflected on the outer surface of the lens, and then light is emitted in a direction inclined at 80° or more with respect to the optical axis direction through the outer surface of the lens.

With such configuration, the vehicle lamp can emit the light as far outward as possible in the vehicle width direction.

According to the fifth aspect of the invention, in the vehicle lamp of the fourth aspect, when a point where light internally reflected at the point b3 is emitted through the outer surface of the lens is set as a point b4, an angle between light emitted through the point b4 and the optical axis is set as an angle $\beta5$, an angle between a direction orthogonal to the optical axis direction and the additional reflective surface is set as an angle $\theta b3$, an angle between the outer surface at the point b4 and a direction intersecting with the optical axis is defined as an angle $\theta b4$, and a refractive index of the lens is defined as n', the angle $\beta5$ satisfies:

$$\beta5\geq80°$$

the angle $\theta b3$ satisfies:

$$\theta b3=[\arcsin\{\sin(80-\theta b4)\times n'\}-\beta3+\theta b4]/(-2).$$

With such configuration, the vehicle lamp can reliably emit the light outward in the vehicle width direction.

Effects of Invention

According to the invention, the vehicle lamp can improve the visibility and design aesthetics from the outside while effectively distributing light emitted from the light source to efficiently obtain light emitted outward in the vehicle width direction as required by regulations.

BRIEF DESCRIPTION OF DRAWINGS

[FIG. 1] FIG. 1 is a perspective view of a vehicle lamp in an embodiment of the invention.

[FIG. 2] FIG. 2 is an exploded perspective view of the vehicle lamp in the embodiment of the invention.

[FIG. 3] FIG. 3 is a perspective view of a lens viewed from the rear in the embodiment of the invention.

[FIG. 4] FIG. 4 is a cross-sectional view along a line IV-IV in FIG. 1.

[FIG. 5] FIG. 5 is a diagram for describing a formation position of an additional reflective surface in the embodiment of the invention.

[FIG. 6] FIG. 6 is an enlarged view of a portion VI in FIG. 5.

[FIG. 7] FIG. 7 is an enlarged view of a portion VII in FIG. 5.

[FIG. 8] FIG. 8 is an enlarged view of a portion VIII in FIG. 5.

[FIG. 9] FIG. 9 is an enlarged view of a portion IX in FIG. 5.

DESCRIPTION OF EMBODIMENTS

Next, an embodiment of the invention will be described based on the drawings.

<Vehicle lamp>

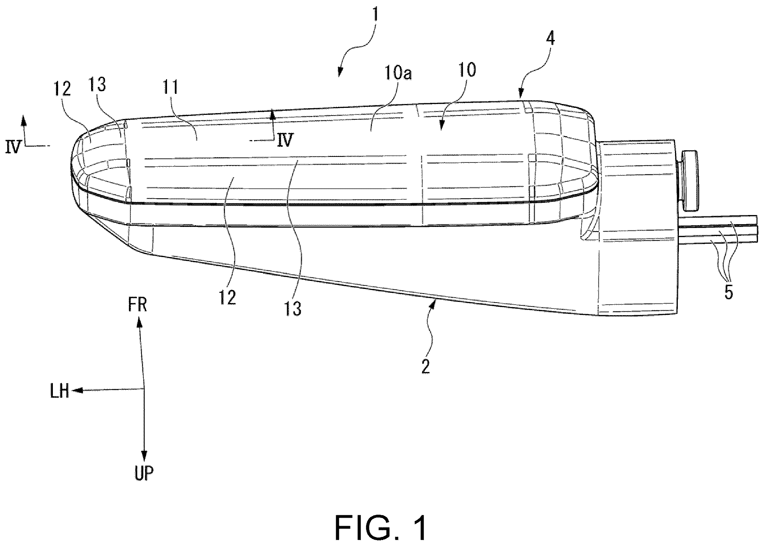

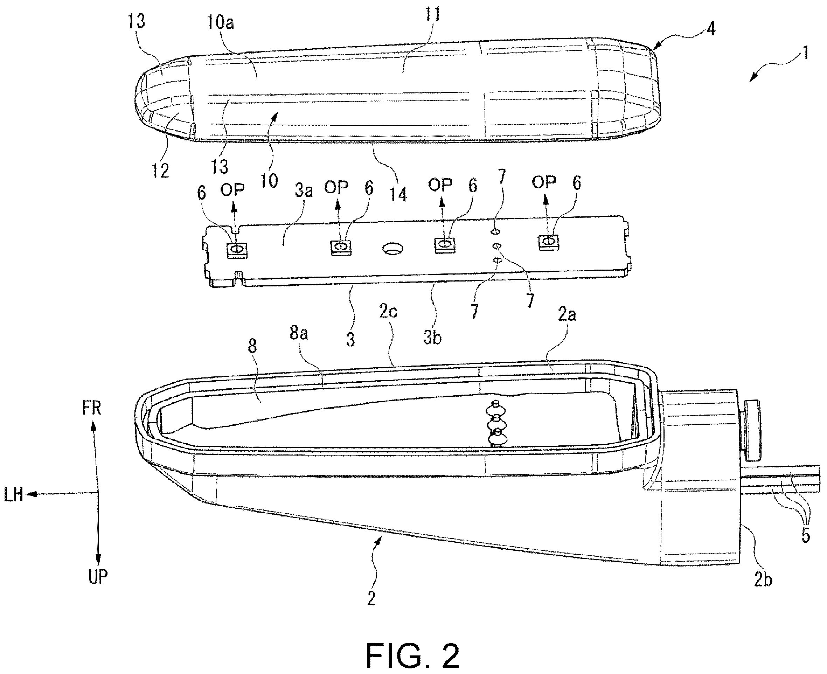

FIG. 1 is a perspective view of a vehicle lamp 1. FIG. 2 is an exploded perspective view of the vehicle lamp 1. The vehicle lamp 1 is, for example, a so-called turn signal indicator that is provided at the front or the rear in the vehicle body lateral side part of a motorcycle, which is not shown in the figure. As shown in FIG. 1 and FIG. 2, the vehicle lamp 1 includes a housing 2, a substrate 3 accommodated in the housing 2, and a lens 4 attached to the housing 2.

In the case where the vehicle lamp 1 is provided at the front of the vehicle body (not shown), the lens 4 is arranged facing forward. In the case where the vehicle lamp 1 is provided at the rear of the vehicle body (not shown), the lens 4 is arranged facing rearward. In the embodiment, the vehicle lamp 1 is described as being provided at the front of the left side part of the vehicle body. In the figures, an arrow FR indicates the front of the vehicle, an arrow UP indicates the top of the vehicle, and an arrow LH indicates the left of the vehicle. The vehicle width direction of the vehicle body and the left-right direction coincide. The outer side in the vehicle width direction of the vehicle lamp 1 is the left.

<Housing>

The housing 2 is formed of resin, for example. The housing 2 has a box shape with an opening part 2a at the front part, and is formed to be elongated in the vehicle width direction. An abutting wall 8 is formed on the inner circumferential surface of the housing 2 throughout the entire circumference. A front end 8a of the abutting wall 8 is positioned in the vicinity of the opening part 2a. The front end 8a of the abutting wall 8 is positioned at the rear of a front end 2c forming the opening part 2a of the housing 2.

On the inner side of the housing 2 in the vehicle width direction, a through hole 2b is formed. The housing 2 is fixed to the vehicle body, which is not shown, by attaching the through hole 2b to the vehicle body. Multiple harnesses 5 are inserted through the through hole 2b. The substrate 3 accommodated in the housing 2 is electrically connected to a battery (not shown) through the harnesses 5.

<Substrate>

The substrate 3 is formed to be elongated in the vehicle width direction to correspond to the shape of the housing 2. The mounting surface of the substrate 3 is oriented in the front-rear direction. On the mounting surface of the substrate 3, multiple (e.g., four in the embodiment) light emitting bodies 6 are mounted on a front surface 3a, that is, a surface on the side of the opening part 2a of the housing 2. The light emitting body 6 is an example of the light source in the claims, and is, for example, a light emitting diode (LED). However, the invention is not limited thereto and various electrical devices, elements, etc., can be utilized as the light source.

Multiple (e.g., three in the embodiment) through holes 7 are formed in the substrate 3. The through holes 7 are arranged in a short direction. Additionally, the through holes 7 are disposed near the inner side in the vehicle width direction between two light emitting bodies 6. The harnesses 5 are inserted into the through holes 7 from the side of the rear surface 3b of the substrate 3 and are bonded to the substrate 3.

Although the light emitting body 6 emits light forward, the light itself spreads radially. In the following description, an optical axis OP (referring to the dot-dash line in FIG. 2) refers to a direction that passes through the center of each light emitting body 6 and that is parallel to the normal direction with respect to the front surface 3a of the substrate 3.

<Lens>

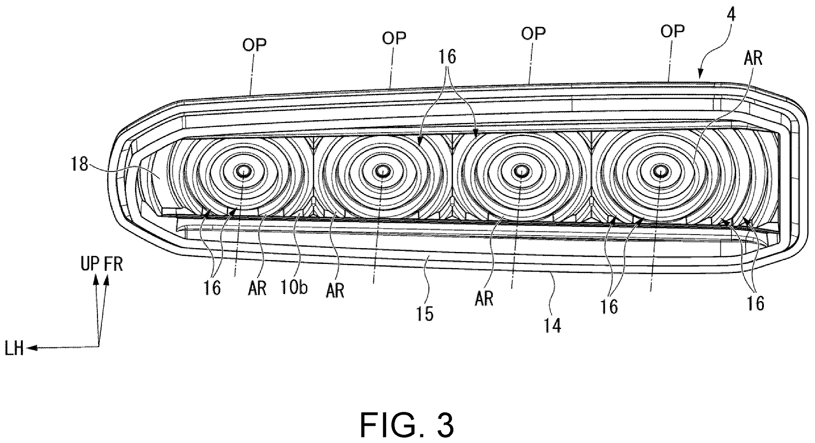

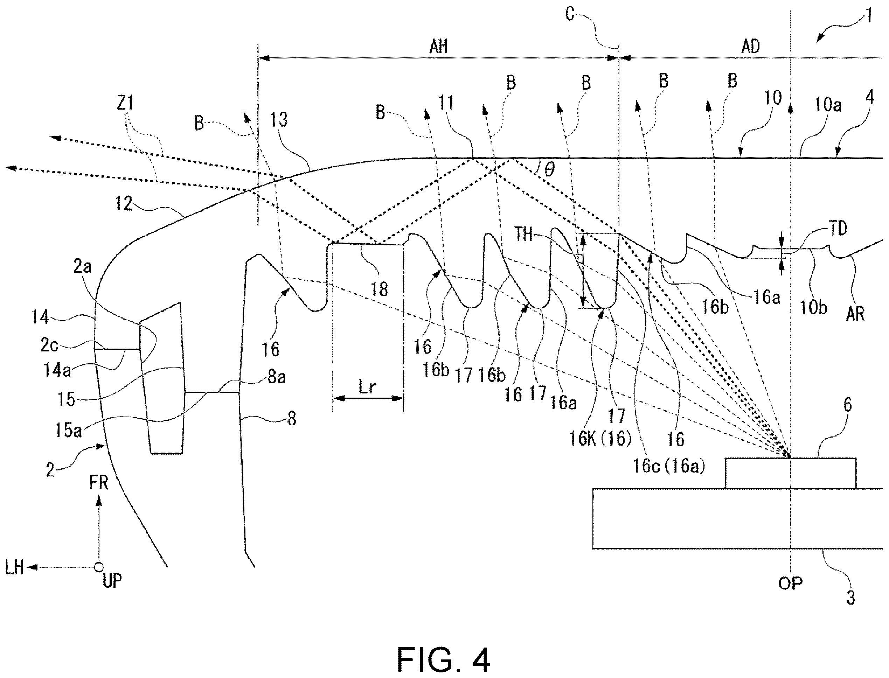

FIG. 3 is a perspective view of the lens 4 from the rear. FIG. 4 is a cross-sectional view along a line IV-IV in FIG. 1. As shown in FIGs. 2 to 4, the lens 4 is attached, for example, by using an adhesive to close the opening part 2a of the housing 2. The lens 4 is formed by a highly transparent resin material. The lens 4 is formed, for example, by an acrylic resin (PMMA) or a polycarbonate resin (PC).

The lens 4 is formed to be elongated in the vehicle width direction to correspond to the shape of the opening part 2a of the housing 2. The lens 4 has a plate-shaped lens body 10 that slightly protrudes forward. The lens body 10 has a flat outer surface 11 that is formed on the majority of the outer surface (front surface) 10a and elongated in the vehicle width direction, and an inclined outer surface 12 that extends obliquely rearward from the periphery of the flat outer surface 11. The flat outer surface 11 and the inclined outer surface 12 are smoothly connected through a curved outer surface 13.

The shape of the outer peripheral edge of the inclined outer surface 12 is flush with the shape of the outer peripheral edge at the front end 2c of the housing 2. A first abutting wall 14 that protrudes rearward is integrally formed on the outer peripheral edge of the inclined outer surface 12. A rear end 14a of the first abutting wall 14 abuts against the front end 2c of the housing 2.

On the inner surface (rear surface) 10b of the lens body 10, a second abutting wall 15 that protrudes rearward is integrally formed around the entire circumference in the vicinity of the central part of the lens body 10 with respect to the first abutting wall 14. The second abutting wall 15 protrudes further rearward than the first abutting wall 14. A rear end 15a of the second abutting wall 15 abuts against the abutting wall 8 of the housing 2. In this way, the lens 4 is fixed to the housing 2, for example, by using an adhesive.

In the inner surface 10b of the lens body 10, a region surrounded by the second abutting wall 15 is divided into multiple lens cut regions AR. Each lens cut region AR is disposed at a position facing, in the front-rear direction, a corresponding light emitting body 6 in the front-rear direction. Specifically, for example, four lens cut regions AR are formed on the inner surface 10b of the lens body 10. Multiple lens cut parts 16 are formed in each lens cut region AR.

The lens cut parts 16 are provided for distributing the light emitted to the lens 4 so as to emit the light forward along the direction of the optical axis OP.

In the description of the embodiment, "along" also includes directions that are necessarily parallel to the target direction. The expression "along" is intended to also include the extent of directions approximately close to the target direction. Regarding the direction of "along", the following description will explain the angle with respect to the target direction as necessary.

The lens cut parts 16 are formed as convex ridges protruding rearward from the inner surface 10b of the lens body 10. The lens cut parts 16 are formed in concentric circles centered on the optical axis OP of each light emitting body 6. Inner circumferential surfaces 16a of the lens cut parts 16 on the side of the optical axis OP are formed along the direction of the optical axis OP. The lens cut parts 16 are formed to be inclined, so that outer circumferential surfaces 16b on a side opposite to the inner circumferential surfaces 16a are away from the corresponding optical axis OP when extending forward. As a result, the lens cut parts 16 are formed to be tapered when extending rearward (in the protruding direction). Chamfered parts 17 are formed at the tips of the lens cut parts 16.

Light B from each corresponding light emitting body 6 is emitted into the lens cut part 16 so formed, and then passes through the lens 4 to be emitted from the respective outer surfaces 11, 12, 13. At this time, the behavior of light B is as follows. That is:

(X1) the light B emitted into the lens 4 is directly guided to the flat outer surface 11;
(X2) the light B emitted into the lens 4 passes through the lens cut parts 16 and is internally reflected by the outer circumferential surfaces 16b, then guided toward the respective outer surface 11, 12, 13.

(X1) above occurs in the case where the light B is emitted into the lens 4 from a region near the optical axis OP. Hereinafter, such a region is referred to as a direct illumination cut region AD.
(X2) above occurs in the case where the light B is emitted into the lens 4 from a region more distant from the optical axis OP than the direct illumination cut region AD. Hereinafter, such a region is referred to as a reflection cut region AH.
A protrusion height TD of the lens cut part 16 formed in the direct illumination cut region AD is lower than a protrusion height TH of the lens cut part 16 formed in the reflection cut region AH.

Here, among the lens cut parts 16 formed in the reflection cut region AH, the lens cut part 16 formed closest to the direct illumination cut region AD is referred to as a boundary cut part 16K. The inner circumferential surface 16a of the boundary cut part 16K is set on a boundary C between the direct illumination cut region AD and the reflection cut region AH. In the following description, the inner circumferential surface 16a of the boundary cut part 16K is referred to as a boundary surface 16c.

The behavior of light emitted into the lens 4 through the boundary surface 16c is as follows. That is:

(Y1) the light B emitted into the lens 4 through the boundary surface 16c is directly guided toward the flat outer surface 11;
(Y2) the light B emitted into the lens 4 through the boundary surface 16c passes through the lens cut part 16, is internally reflected on the outer circumferential surface 16b, and is then guided to the flat outer surface 11.

The range of (Y1) is the base side of the boundary cut part 16K on the boundary surface 16c. Hereinafter, the range is referred to as a direct illumination range $\gamma$.
The range of (Y2) is on the tip side of the boundary cut part 16K, among the boundary surface 16c, with respect to the direct illumination range $\gamma$.

The light B emitted into the lens 4 through the direct illumination range $\gamma$ has a small incident angle $\theta$ with respect to the flat outer surface 11. As a result, such light B is not emitted forward through the flat outer surface 11 but is internally reflected on the flat outer surface 11 (refer to an arrow Z1 in FIG. 4). Therefore, an additional reflective surface 18 is formed, in the lens cut region AR, on the outermost side in the vehicle width direction among multiple lens cut regions AR.

The additional reflective surface 18 has a role to distribute light, so that the light B emitted into the lens 4 through the direction illumination range $\gamma$ is internally reflected on the flat outer surface 11 and then further internally reflected, and is emitted toward the outer side in the vehicle width direction along a direction orthogonal to the direction of the optical axis B. A direction orthogonal to the direction of the optical axis OP not only includes directions completely orthogonal to the direction of the optical axis OP, but also includes directions similar to such directions completely orthogonal to the optical axis Op A direction orthogonal to the direction of the optical axis 60 specifically refers to a direction that forms about 80° with respect to the optical axis OP, for example. In the following, in order to accurately realize the role of the additional reflective surface 18, the formation position of the additional reflective surface 18.

<Regarding the formation position of the additional formation surface>

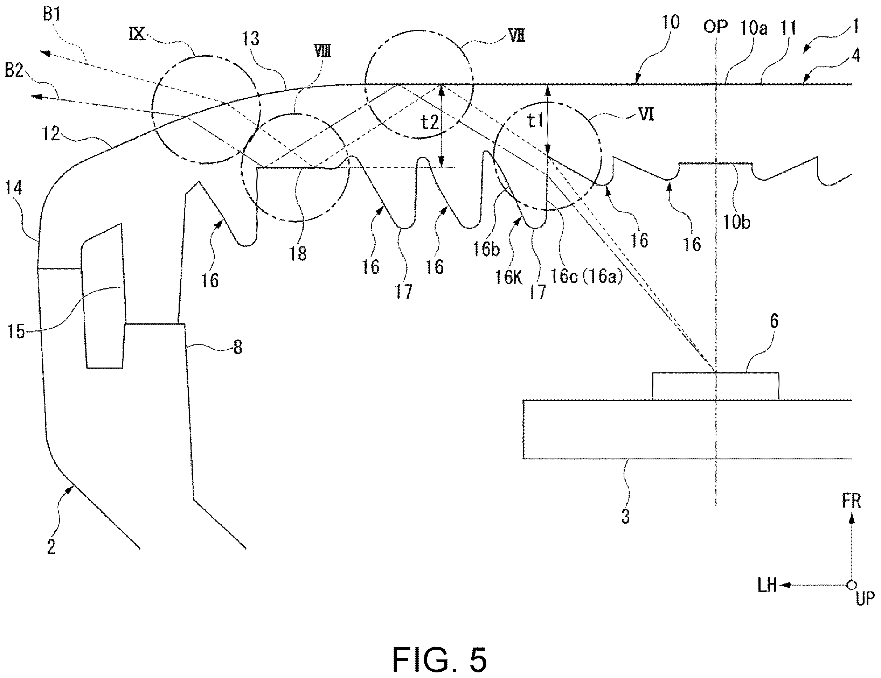

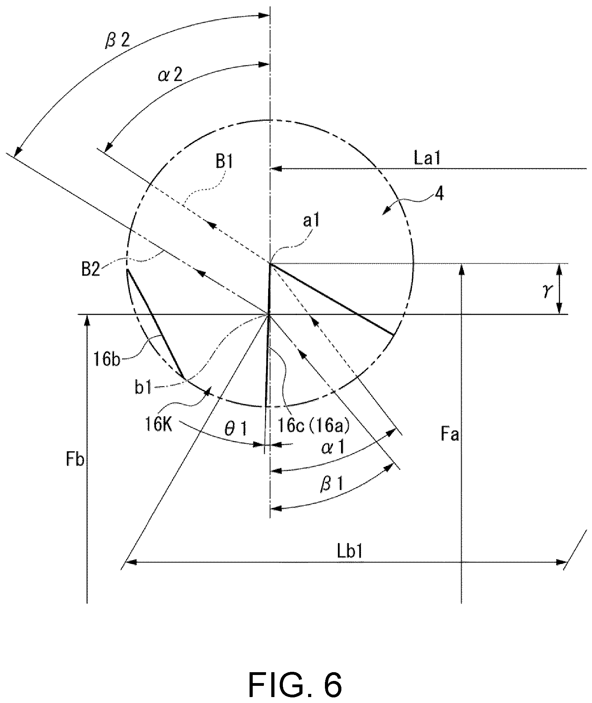

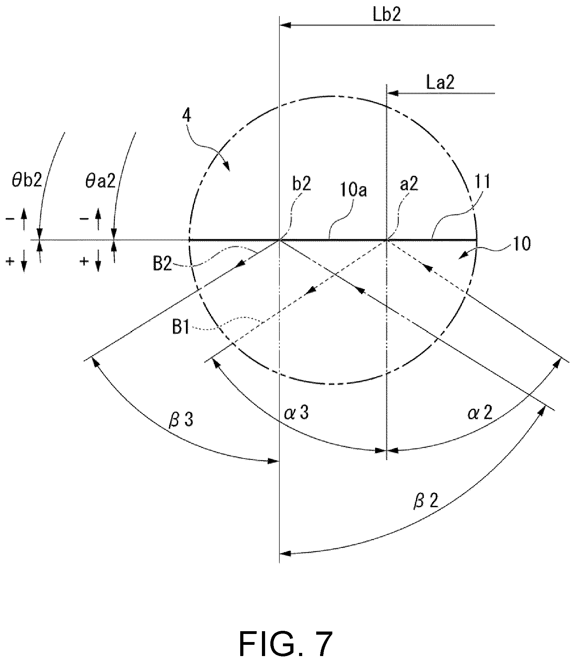

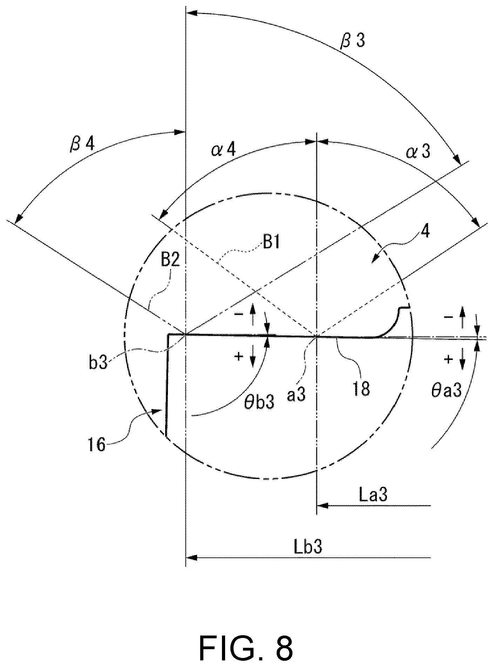

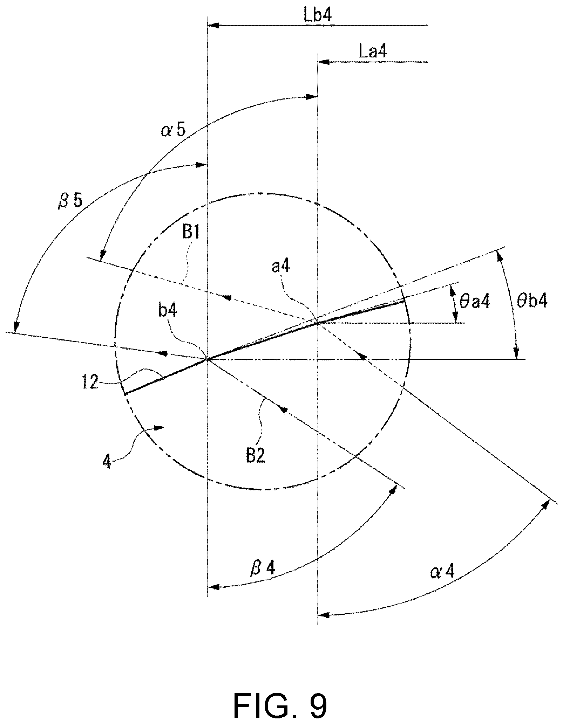

FIG. 5 is a diagram for describing the formation position of the additional reflective surface 18. FIG. 5 corresponds FIG. 4. FIG. 6 is an enlarged view of a portion VI in FIG. 5. FIG. 7 is an enlarged view of a portion VII in FIG. 5. FIG. 8 is an enlarged view of a portion VIII in FIG. 5. FIG. 9 is an enlarged view of a portion IX in FIG. 5.
Based on FIGs. 4 to 9, the formation position of the additional reflective surface 18 will be described.

Here, the symbols shown in FIGs. 4 to 9 are defined as follows:

n : refractive index of the atmosphere (in the embodiment, it is considered that n ≈ 1);
n' : refractive index of the lens 4;
Lr : formation range of the additional reflective surface 18;
$\gamma$: direct illumination range;
$\theta 1$ : an angle between the boundary surface 16c where the direct illumination range $\gamma$ is formed and the optical axis OP;
a1 : a point that is farthest from the corresponding light emitting body 6 in the direct illumination range $\gamma$;
b1 : a point that is closest to the corresponding light emitting body 6 in the direct illumination range $\gamma$;

a2 : a point where the light B emitted into the lens 4 through the point a1 is internally reflected on the outer surface 10a of the lens body 10;

b2 : a point where the light B emitted into the lens 4 through the point b1 is internally reflected on the outer surface 10a of the lens body 10;

a3 : a point where the light B internally reflected at the point a2 is again internally reflected on the inner surface 10b of the lens body 10;

b3 : a point where the light B internally reflected at the point b2 is again internally reflected on the inner surface 10b of the lens body 10;

a4 : a point where the light B internally reflected at the point a3 is emitted through the outer surface 10a of the lens body 10;

b4 : a point where the light B internally reflected at the point b3 is emitted through the outer surface 10a of the lens body 10;

t1 : a distance along the optical axis direction between the light source side end in the optical axis direction at the point a1 and the light emission side end in the optical axis direction at the point a2, or the distance along the optical axis direction between the light source side end in the optical axis direction at the point b1 and the light emission side end in the optical axis direction at the point b2;

t2 : a thickness of the lens 4 parallel to the direction of the optical axis OP between the points a2 and a3, or the thickness of the lens 4 parallel to the direction of the optical axis OP between the points b2 and b3.

The following defines the symbols related to the behavior of the light B (see light B1 in FIGs. 5 to 9) emitted into the lens 4 through the point a1.

Fa: a distance (focal distance) between the light emitting body 6 and the point a1 in the direction of the optical axis OP;

La1: a distance between the light emitting body 6 and the point a1 in a direction orthogonal to the direction of the optical axis OP;

La2: a distance between the light emitting body 6 and the point a2 in a direction orthogonal to the direction of the optical axis OP;

La3: a distance between the light emitting body 6 and the point a3 in a direction orthogonal to the direction of the optical axis OP;

La4: a distance between the light emitting body 6 and the point a4 in a direction orthogonal to the direction of the optical axis OP;

$\theta$a2: an angle between the outer surface 10a of the lens body 10 at the point a2 and a direction orthogonal to the optical axis OP;

$\theta$a3: an angle between the outer surface 10a of the lens body 10 at the point a3 and a direction orthogonal to the optical axis OP;

$\theta$a4: an angle between the outer surface 10a of the lens body 10 at the point a4 and a direction orthogonal to the optical axis OP;

$\alpha$1: an angle between the light B before being emitted to the point a1 and the optical axis OP;

$\alpha$2: an angle between the light B after being emitted through the point a1 and the optical axis OP;

$\alpha$3: an angle between the light B after being internally reflected at the point a2 and the optical axis OP;

$\alpha$4: an angle between the light B after being internally reflected at the point a3 and the optical axis OP;

$\alpha$5: an angle between the light B emitted through the point a4 and the optical axis OP.

Here, the equations for $\alpha$1 to $\alpha$5 are as follows.
That is, as shown in FIG. 6,

$$\alpha1 = \arctan(Fa/La);$$

$$n \times \sin(90 - \alpha1 - \theta1) = n' \times \sin(90 - \alpha2 - \theta1);$$

$$90 - \alpha2 - \theta1 = \arcsin\{\sin(90 - \alpha1 - \theta1)/n'\};$$

$$\alpha2 = \arcsin\{\sin(90 - \alpha1 - \theta1)/n'\} - 90 + \theta1$$

As shown in FIG. 7,

$$\alpha2-\theta a2=\alpha3+\theta a2;$$

$$\alpha3=\alpha2-2\times\theta a2$$

As shown in FIG. 8,

$$\alpha3-\theta a3=\alpha4+\theta a3;$$

$$\alpha4=\alpha3-2\times\theta a3$$

As shown in FIG. 9,

$$n'\times\sin(\alpha4-\theta a4)=n\times\sin(\alpha5-\theta a4)$$

$$\alpha5-\theta a4=\arcsin\{\sin(\alpha4-\theta a4)\times n'\}$$

$$\alpha5=\arcsin\{\sin(\alpha4-\theta a4)\times n'\}+\theta a4.$$

According to the above, the equations for La1 to La4 are as follows.

$$La2=La1+t1\times\tan\alpha2$$

$$La3=La1+t1\times\tan\alpha2+t2\times\tan\alpha3 \ ...(1)$$

The following defines the symbols related to the behavior of the light B (see the light B2 in FIGs. 5 to 9) emitted into the lens 4 through the point b1.

Fb : a distance (focal distance) between the light emitting body 6 and the point b1 in the direction of the optical axis OP;
Lb1: a distance between the light emitting body 6 and the point b1 in a direction orthogonal to the direction of the optical axis OP;
Lb2: a distance between the light emitting body 6 and the point b2 in a direction orthogonal to the direction of the optical axis OP;
Lb3: a distance between the light emitting body 6 and the point b3 in a direction orthogonal to the direction of the optical axis OP;
Lb4: a distance between the light emitting body 6 and the point b4 in a direction orthogonal to the direction of the optical axis OP;
$\theta b2$: an angle between the outer surface 10a of the lens body 10 at the point b2 and a direction orthogonal to the optical axis OP;
$\theta b3$: an angle between the outer surface 10a of the lens body 10 at the point b3 and a direction orthogonal to the optical axis OP;
$\theta b4$: an angle between the outer surface 10a of the lens body 10 at the point b4 and a direction orthogonal to the optical axis OP;
$\beta1$: an angle between the light B before being emitted to the point b1 and the optical axis OP;
$\beta2$: an angle between the light B after being emitted through the point b1 and the optical axis OP;
$\beta3$: an angle between the light B after being internally reflected at the point b2 and the optical axis OP;
$\beta4$: an angle between the light B after being internally reflected at the point b3 and the optical axis OP;
$\beta5$: an angle between the light B emitted through the point b4 and the optical axis OP.

Here, the equations for $\beta1$ to $\beta5$ are as follows.
That is, as shown in FIG. 6,

$$\beta1=\arctan(Fb/Lb1);$$

$$n \times \sin(90-\beta 1-\theta 1)=n' \times \sin(90-\beta 2-\theta 1);$$

$$90-\beta 2-\theta 1=\arcsin\{\sin(90-\beta 1-\theta 1)/n'\};$$

$$\beta 2=\arcsin\{\sin(90-\beta 1-\theta 1)/n'\}-90+\theta 1.$$

As shown in FIG. 7,

$$\beta 2-\theta b2=\beta 3+\theta b2$$

$$\beta 3=\beta 2-2\times\theta b2.$$

As shown in FIG. 8,

$$\beta 3-\theta b3=\beta 4+\theta b3$$

$$\beta 4=\beta 3-2\times\theta b3$$

As shown in FIG. 9,

$$n' \times \sin(\beta 4-\theta b4)=n \times \sin(\beta 5-\theta b4)$$

$$\beta 5-\theta b4=\arcsin\{\sin(\beta 4-\theta b4)\times n'\}$$

$$\beta 5=\arcsin\{\sin(\beta 4-\theta b4)\times n'\}+\theta b4.$$

Here, $\theta b3$ as the setting angle of the additional reflective surface 18, when expressed in an equation using $\beta 5$, becomes the following equation (2). It is desirable to set $\beta 5=80°$. This is because by setting $\beta 5$ in this way, it is possible to obtain the light B emitted outward in the vehicle width direction as required by regulations. In the case where $\theta b3$ as the setting angle of the additional reflective surface 18 is set to an angle that makes $\beta 5=80°$, it is expressed by the following equation (3). That is:

$$\beta 5-\theta b4=\arcsin[\sin\{(\beta 3-2\times\theta b3)-\theta b4\}\times n']\times n'$$

$$\arcsin\{\sin(\beta 5-\theta b4)\times n'\}=(\beta 3-2\times\theta b3)-\theta b4$$

$$\theta b3=[\arcsin\{\sin(\beta 5-\theta b4)\times n'\}-\beta 3+\theta b4]/(-2)...(2)$$

$$\theta b3=[\arcsin\{\sin(80-\theta b4)\times n'\}-\beta 3+\theta b4]/(-2)...(3)$$

Regarding Equation (3) above, it does not need to be completely satisfied, and it is understood to include an approximate range due to manufacturing errors.

According to the above, the equations for Lb1 to Lb4 are as follows.

$$Lb2=Lb1+t1\times\tan\beta 2$$

$$Lb3=Lb1+t1\times\tan\beta 2+t2\times\tan\beta 3...(4)$$

Therefore, the formation range Lr of the additional reflective surface 18 satisfies:

$$La3 \leq Lr \leq Lb3...(5)$$

In this way, in the embodiment, the inner surface 10b of the lens body 10 (lens 4) has the lens cut region AR. In the lens cut region AR, the lens cut parts 16 are formed. The lens cut parts 16 distribute light so that the light B emitted from the light emitting body 6 into the lens 4 is emitted outward along the direction of the optical axis OP. In a portion of the lens cut region AR, the additional reflective surface 18 is formed. The additional reflective surface 18 distributes light, so that the light B internally reflected by the outer surface 10a, among the light emitted from the light emitting body 6 into the lens 4, is internally reflected and emitted outward along a direction orthogonal to the optical axis direction.

As a result, it is possible to emit the majority of the light B from the light emitting body 6 along the direction of the optical axis OP through the outer surface 10a of the lens body 10 (lens 4). The visibility and design aesthetics of the vehicle lamp 1 when viewed from the exterior can be improved.

In addition, it is possible to emit the light B internally reflected by the lens 4 along a direction orthogonal to the direction of the optical axis OP by utilizing the additional reflective surface 18. Therefore, with a simple structure, it is possible to efficiently obtain the emitted light directed outward in the vehicle width direction as required by regulations.

In particular, the vehicle lamp 1 includes multiple (four in this embodiment) light emitting bodies 6. Multiple lens cut regions AR corresponding to each light emitting body 6 are provided. The additional reflective surface 18 is disposed on the outer side in the vehicle width direction with respect to the light emitting body 6 in the lens cut region AR disposed on the outermost side in the vehicle width direction. As a result, the vehicle lamp 1 can more efficiently and reliably obtain the light emitted outward in the vehicle width direction, as required by regulations.

In a direction orthogonal to the direction of the optical axis OP, the distance La3 between the light emitting body 6 and the point a3 satisfies Equation (1). In a direction orthogonal to the direction of the optical axis OP, the distance Lb3 between the light emitting body 6 and the point b3 satisfies Equation (4). The formation range Lr of the additional reflective surface 18 satisfies Equation (5). As a result, it is possible to dispose the additional reflective surface 18 at an appropriate location. Accordingly, the vehicle lamp 1 can more efficiently and reliably obtain the light emitted outward in the vehicle width direction, as required by regulations.

The lens 4 is formed so that the light B emitted into the lens 4 through the direct illumination range $\gamma$ is internally reflected by the outer surface 10a of the lens body 10 (lens 4) and further internally reflected by the additional reflective surface 18, and then emitted in a direction inclined at 80° or more with respect to the direction of the optical axis OP through the outer surface 10a of the lens body 10 (lens 4). As a result, the vehicle lamp 1 can emit the light B as far outward as possible in the vehicle width direction.

As described above, the angle $\beta5$ between the light B emitted through the point b4 and the optical axis OP satisfies $\beta5=80°$. The angle $\theta b3$ between the outer surface 10a of the lens body 10 at the point b3 and a direction orthogonal to the optical axis OP satisfies Equation (3). As a result, the vehicle lamp 1 can reliably emit the light B outward in the vehicle width direction.

The visibility and design aesthetics for the vehicle lamp 1 when viewed from the exterior can be improved. In addition, it is possible to emit the light B internally reflected by the lens 4 along a direction orthogonal to the direction of the optical axis OP by utilizing the additional reflective surface 18. Therefore, with a simple structure, it is possible to efficiently obtain the emitted light directed outward in the vehicle width direction as required by regulations. Consequently, it becomes possible to contribute to the United Nations' Sustainable Development Goal 11: "Make cities and human settlements inclusive, safe, resilient and sustainable".

The invention is not limited to the embodiments, and includes various modifications added to the embodiments within a range not departing from the spirit of the invention.

For example, in the embodiment, the vehicle lamp 1 is described as a so-called turn signal indicator installed to the front or the rear of a vehicle body side part of a motorcycle (not shown). However, the invention is not limited thereto, and the configuration of the vehicle lamp 1 can be adopted as a lamp body used for a variety of vehicles, such as four-wheeled vehicles.

In the embodiment, the vehicle lamp 1 is described as having, for example, four light emitting bodies 6, and four lens cut regions AR formed corresponding to the light emitting bodies 6. However, the invention is not limited thereto, and the number of the light emitting bodies 6 may be one or more. The number of the lens cut regions AR may also be changed according to the number of light emitting bodies 6.

In the embodiment, the lens cut parts 16 formed in each lens cut region AR are described as being formed in concentric circles centered on the optical axis OP of each light emitting body 6. However, the invention is not limited thereto, and the lens cut parts 16 can be formed in various shapes such as square, triangular, hexagonal, octagonal, elliptical shapes, etc., when viewed in the direction of the optical axis OP. Particularly, in the case of a polygonal shape, it is preferable if the lens cut parts 16 are even-sided polygons, such as square, hexagonal, or octagonal shapes, as the lens cut parts 16 may have a shape that is vertically and horizontally symmetrical. By adopting such shapes, it is possible to diffuse the emitted light evenly to the surroundings.

In the embodiment, the lens cut parts 16 are described as being formed in each lens cut region AR. However, the invention is not limited thereto, and it is sufficient if at least one lens cut part 16 is formed in each lens cut region AR. Additionally, it is sufficient if the lens cut parts 16 are formed at least in the reflection cut region AH.

In the embodiment, the following case is described: the additional reflective surface 18 has a role to distribute light, so that the light B emitted into the lens 4 through the direction illumination range $\gamma$ is internally reflected on the flat outer surface 11 and then further internally reflected, and is emitted toward the outer side in the vehicle width direction along a direction orthogonal to the direction of the optical axis B. However, the invention is not limited thereto, and it is sufficient if the additional reflective surface 18 distributes light along a direction that intersects with the direction of the optical axis OP.

[Reference Signs List]

1: vehicle lamp; 2: housing; 2a: opening part; 2b: insertion hole; 2c: front end; 3: substrate; 3a: front surface; 3b: rear surface; 4: lens; 5: harness; 6: light emitting body; 7: through hole; 8: abutting wall; 8a: front end; 10: lens body; 10a: outer surface; 10b: inner surface; 11: flat outer surface; 12: inclined outer surface; 13: curved outer surface; 14: first abutting wall; 14a: rear end; 15: second abutting wall; 15a: rear end; 16: lens cut part; 16a: inner circumferential surface; 16b: outer circumferential surface; 16c: boundary surface; 16K: boundary cut part; 17: chamfered part; 18: additional reflective surface; a1: a point that is farthest from the corresponding light emitting body 6 in the direct illumination range $\gamma$; a2: a point where the light B emitted into the lens 4 through the point a1 is internally reflected on the outer surface 10a of the lens body 10; a3: a point where the light B internally reflected at the point a2 is again internally reflected on the inner surface 10b of the lens body 10; a4 : a point where the light B internally reflected at the point a3 is emitted through the outer surface 10a of the lens body 10; AD: direct illumination cut region; AH: reflection cut region; AR: lens cut region; B, B1, B2: light; b1 : a point that is closest to the corresponding light emitting body 6 in the direct illumination range $\gamma$; b2 : a point where the light B emitted into the lens 4 through the point b1 is internally reflected on the outer surface 10a of the lens body 10; b3 : a point where the light B internally reflected at the point b2 is again internally reflected on the inner surface 10b of the lens body 10; b4 : a point where the light B internally reflected at the point b3 is emitted through the outer surface 10a of the lens body 10; C: boundary; Fa : a distance (focal distance) between the light emitting body 6 and the point a1 in the direction of the optical axis OP; Fb : a distance (focal distance) between the light emitting body 6 and the point b1 in the direction of the optical axis OP; La1: a distance between the light emitting body 6 and the point a1 in a direction orthogonal to the direction of the optical axis OP; La2: a distance between the light emitting body 6 and the point a2 in a direction orthogonal to the direction of the optical axis OP; La3: a distance between the light emitting body 6 and the point a3 in a direction orthogonal to the direction of the optical axis OP; La4: a distance between the light emitting body 6 and the point a4 in a direction orthogonal to the direction of the optical axis OP; Lb1: a distance between the light source and the point b1; Lb2: a distance between the light emitting body 6 and the point b2 in a direction orthogonal to the direction of the optical axis OP; Lb3: a distance between the light source and the point b3 in a direction orthogonal to the optical axis direction; Lb4: a distance between the light emitting body 6 and the point b4 in a direction orthogonal to the direction of the optical axis OP; Lr: a distance of the additional reflective surface from the light source in a direction orthogonal to the optical axis direction; Op: optical axis; t1: a distance along the optical axis direction between the light source side end in the optical axis direction at the point a1 and the light emission side end in the optical axis direction at the point a2, or the distance along the optical axis direction between the light source side end in the optical axis direction at the point b1 and the light emission side end in the optical axis direction at the point b2; t2 : a thickness of the lens 4 parallel to the direction of the optical axis OP between the points a2 and a3, or the thickness of the lens 4 parallel to the direction of the optical axis OP between the points b2 and b3; TD, TH: protrusion height; Z1: arrow; $\theta 1$ : an angle between the boundary surface 16c where the direct illumination range $\gamma$ is formed and the optical axis OP; $\theta a2$: an angle between the outer surface 10a of the lens body 10 at the point a2 and a direction orthogonal to the optical axis OP; $\theta a3$: an angle between the outer surface 10a of the lens body 10 at the point a3 and a direction orthogonal to the optical axis OP; $\theta a4$: an angle between the outer surface 10a of the lens body 10 at the point a4 and a direction orthogonal to the optical axis OP; $\theta b2$: an angle between the outer surface 10a of the lens body 10 at the point b2 and a direction orthogonal to the optical axis OP; $\theta b3$: an angle between the outer surface 10a of the lens body 10 at the point b3 and a direction orthogonal to the optical axis OP; $\theta b4$: an angle between the outer surface 10a of the lens body 10 at the point b4 and a direction orthogonal to the optical axis OP; $\alpha 1$: an angle between the light B before being emitted to the point al and the optical axis OP; $\alpha 2$: an angle between the light B after being emitted through the point a1 and the optical axis OP; $\alpha 3$: an angle between the light B after being internally reflected at the point a2 and the optical axis OP; $\alpha 4$: an angle between the light B after being internally reflected at the point a3 and the optical axis OP; $\alpha 5$: an angle between the light B emitted through the point a4 and the optical axis OP; $\beta 1$: an angle between the light B before being emitted to the point b1 and the optical axis OP; $\beta 2$: an angle between the light B after being emitted through the point b1 and the optical axis OP; $\beta 3$: an angle between the light B after being internally reflected at the point b2 and the optical axis OP; $\beta 4$: an angle between the light B after being internally reflected at the point b3 and the optical axis OP; $\beta 5$: an angle between the light B emitted through the point b4 and the optical axis OP; $\gamma$ : direct illumination range.

**Claims**

1. A vehicle lamp, provided in a vehicle and comprising:

   a lens; and
   a light source, disposed on an inner surface side of the lens and emitting light toward an outer surface side of the lens through the lens,
   wherein an inner surface of the lens has a lens cut region,
   in the lens cut region, at least one lens cut part is formed, the at least one lens cut part distributing light so that the light emitted from the light source into the lens is emitted outward along an optical axis direction,
   an additional reflective surface formed at a portion of the lens cut region is provided,
   among the light emitted from the light source into the lens, the additional reflective surface internally reflects light internally reflected on an outer surface of the lens and performs orientation so that the light is emitted outward along a direction intersecting with the optical axis direction.

2. The vehicle lamp as claimed in claim 1, comprising:

   a plurality of the light sources; and
   a plurality of the lens cut regions, corresponding to the respective light sources,
   wherein the additional reflective surface is disposed on an outer side in a vehicle with direction with respect to the light source in the lens cut region arranged on an outermost side in the vehicle width direction.

3. The vehicle lamp as claimed in claim 1 or 2, wherein the lens cut region has:

   a direct illumination cut region, in which the light emitted from the light source into the lens is directly guided toward the outer surface of the lens; and
   a reflection cut region, in which the light emitted from the light source into the lens is internally reflected in the lens cut part and then guided toward the outer surface of the lens,
   wherein at least the lens cut part is formed in the reflection cut region,
   one of the lens cut part formed in the reflection cut region comprises a boundary cut part having a boundary surface along the optical axis direction at a boundary between the direct illumination cut region and the reflection cut region,
   the boundary cut part has:

   a direct illumination range, in which light emitted from the light source into the lens through the boundary surface is directly guided toward the outer surface of the lens; and
   a reflection range, in which the light emitted from the light source into the lens through the boundary surface is internally reflected in the boundary cut part and then guided to the outer surface of the lens,

   when the direct illumination range on the boundary surface is set as $\gamma$, a point that is farthest from the light source in the direct illumination range $\gamma$ is set as a point a1, a point that is closest to the light source in the direct illumination range $\gamma$ is set as a point b1, a point where light emitted into the lens through the point a1 is internally reflected on the outer surface of the lens is set as a point a2, a point where light emitted into the lens through the point b1 is internally reflected on the outer surface of the lens is set as a point b2, a point where light internally reflected at the point a2 is again internally reflected on the inner surface of the lens is set as a point a3, a point where light internally reflected at the point b2 is again internally reflected on the inner surface of the lens is set as a point b3, a distance along the optical axis direction between an light source side end in the optical axis direction at the point a1 and a light emission side end in the optical axis direction at the point a2, or a distance along the optical axis direction between a light source side end in the optical axis direction at the point b1 and a light emission side end in the optical axis direction at the point b2 is set as a distance t1, a thickness of the lens parallel to the optical axis direction between the points a2 and a3, or a thickness of the lens parallel to the optical axis direction between the points b2 and b3 is set as t2, an angle between a direction of light in the lens after the light is emitted through the point a1 and the optical axis direction is set as $\alpha2$, an angle between a direction of light in the lens after the light is emitted through the point a2 and the optical axis direction is set as $\alpha3$, an angle between a direction of light in the lens after the light is emitted through the point b1 and the optical axis direction is set as $\beta2$, an angle between a direction of light in the lens after the light is emitted through the point b2 and the optical axis direction is set as β3, a distance between the light source and the point a1 in a direction orthogonal to the optical axis direction is set as La1, a distance between the light source and the point a3 in a direction orthogonal to the optical axis direction is set as La3, a distance between the light source and the point b1 in a direction orthogonal to the optical axis direction is set as Lb1, a distance between the light source and the point b3 in a direction orthogonal to the optical axis direction is set as Lb3, and a distance of the additional reflective surface from the light source in a direction orthogonal to the optical axis direction is set as Lr,

the distances L13, Lb3, and Lr satisfy:

$$La3 = La1 + t1 \times \tan\alpha2 + t2 \times \tan\alpha3,$$

$$Lb3 = Lb1 + t1 \times \tan\beta2 + t2 \times \tan\beta3, \text{ and}$$

$$La3 \leq Lr \leq Lb3.$$

4. The vehicle lamp as claimed in claim 3, wherein the lens is formed so that light emitted into the lens through the direct illumination range γ is reflected on the outer surface of the lens, and then light is emitted in a direction inclined at 80° or more with respect to the optical axis direction through the outer surface of the lens.

5. The vehicle lamp as claimed in claim 4, wherein when a point where light internally reflected at the point b3 is emitted through the outer surface of the lens is set as a point b4,

an angle between light emitted through the point b4 and the optical axis is set as an angle β5, an angle between a direction orthogonal to the optical axis direction and the additional reflective surface is set as an angle θb3, an angle between the outer surface at the point b4 and a direction intersecting with the optical axis is defined as an angle θb4, and a refractive index of the lens is defined as n',

the angle β5 satisfies:

$$\beta5 \geq 80°,$$

the angle θb3 satisfies:

$$\theta b3 = [\arcsin\{\sin(80 - \theta b4) \times n'\} - \beta3 + \theta b4]/(-2).$$

FIG. 1

FIG. 2

FIG. 3

EP 4 671 605 A1

FIG. 4

FIG. 5

EP 4 671 605 A1

FIG. 6

FIG. 7

FIG. 8

FIG. 9

## INTERNATIONAL SEARCH REPORT

| International application No. |
| --- |
| **PCT/JP2024/000063** |

**A. CLASSIFICATION OF SUBJECT MATTER**

*F21S 43/20*(2018.01)i; *F21V 5/00*(2018.01)i; *F21V 5/04*(2006.01)i; *F21W 103/20*(2018.01)n
FI:   F21S43/20; F21V5/00 320; F21V5/04 650; F21W103:20

According to International Patent Classification (IPC) or to both national classification and IPC

**B. FIELDS SEARCHED**

Minimum documentation searched (classification system followed by classification symbols)

F21S43/20; F21V5/00; F21V5/04; F21W103/20

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| Y | JP 2010-251013 A (STANLEY ELECTRIC CO., LTD.) 04 November 2010 (2010-11-04) paragraphs [0015]-[0058], fig. 1-3, 5 | 1-2 |
| A | | 3-5 |
| Y | WO 2013/145351 A1 (ENDO LIGHTING CORP.) 03 October 2013 (2013-10-03) paragraphs [0026]-[0031], fig. 4 | 1-2 |
| A | | 3-5 |

☐ Further documents are listed in the continuation of Box C.　　☑ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **20 February 2024** | **05 March 2024** |

| Name and mailing address of the ISA/JP | Authorized officer |
| --- | --- |
| **Japan Patent Office (ISA/JP)** 3-4-3 Kasumigaseki, Chiyoda-ku, Tokyo 100-8915 Japan | |
| | Telephone No. |

Form PCT/ISA/210 (second sheet) (July 2022)

**INTERNATIONAL SEARCH REPORT**
Information on patent family members

International application No.

**PCT/JP2024/000063**

| Patent document cited in search report | | | Publication date (day/month/year) | Patent family member(s) | | | Publication date (day/month/year) |
|---|---|---|---|---|---|---|---|
| JP | 2010-251013 | A | 04 November 2010 | US paragraphs [0028]-[0070], fig. 4-6, 8 | 2010/0259153 | A1 | |
| WO | 2013/145351 | A1 | 03 October 2013 | US paragraphs [0033]-[0039], fig. 4 | 2015/0009683 | A1 | |
| | | | | EP | 2833055 | A1 | |
| | | | | CN | 104145157 | A | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2012243734 A

- JP 6381113 B